Europäisches Patentamt

European Patent Office

Office européen des brevets

(19)

(11) Numéro de publication: **0 174 219**
**B1**

(12) # FASCICULE DE BREVET EUROPÉEN

(45) Date de publication du fascicule du brevet:
08.03.89

(51) Int. Cl.⁴: **G 06 G 1/00,** G 06 G 1/08

(21) Numéro de dépôt: **85401400.8**

(22) Date de dépôt: **10.07.85**

(54) Calculateur des vents et de route pour la navigation.

(30) Priorité: **06.08.84 FR 8412507**

(43) Date de publication de la demande:
**12.03.86 Bulletin 86/11**

(45) Mention de la délivrance du brevet:
**08.03.89 Bulletin 89/10**

(84) Etats contractants désignés:
**BE CH DE FR GB IT LI SE**

(56) Documents cité:
**DE-A-2 623 808**
**FR-A-2 105 519**
**FR-A-2 106 940**
**US-A-3 625 417**
**US-A-3 876 866**

(73) Titulaire: **Galiana, Patrick, 15 avenue Honoré
Baradat, F-64000 Pau (FR)**

(72) Inventeur: **Galiana, Patrick, 15 avenue Honoré
Baradat, F-64000 Pau (FR)**

(74) Mandataire: **Epstein, Henri, 7 Rue du Temple,
F-95880 Enghien les Bains (FR)**

EP 0 174 219 B1

LIBER, STOCKHOLM 1989

# EP 0 174 219 B1

**Description**

La présente invention se rapporte à un calculateur de vents et de route pour la navigation permettant à un navigateur à bord d'un bateau en route de déterminer très aisément sans aucun tracé et sans risque d'erreurs, le vent réel (direction, intensité, force) à partir du cap, de l'allure, de la dérive, de la vitesse du bateau et de celle du vent apparent. De plus, dans le cas le plus fréquent où l'on subit un courant marin, il permet aussi de déterminer le vent surface, le cap à prendre pour corriger la dérive du courant, la route fond, ainsi que le vent surface futur lié à l'évolution du courant.

Le calculateur selon l'invention s'adresse à tous les navires, mais principalement aux voiliers en général et aux participants de régates en particulier.

Le calcul des différents paramètres est réalisé habituellement à l'aide de méthodes graphiques, nécessitant table à carte, papier ou carte, crayon, gomme, rapporteur et compas et comportant des risques d'erreur en cas de manque d'attention et de rigueur.

Il existe également des calculateurs de vents comportant impérativement plusieurs disques superposés, dont certains portent une échelle graduée se plaçant, lors de la rotation, en regard de repères fixes et d'autres portant des repères se plaçant en regard d'une échelle graduée fixe, l'ensemble de disques étant mobile en translation pour venir en regard d'un repère fixe, tel qu'une échelle graduée. De tels calculateurs présentent une construction compliquée en raison du nombre d'organes tournants nécessaires à leur fonctionnement et de grandes difficultés de lecture (US-A-3 625 417 et FR-A-2 105 519).

La présente invention a pour objet un calculateur de construction très simple et, par conséquent, d'un maniement très aisé pour le navigateur. Il est caractérisé en ce qu'il comprend deux disques superposés en matière transparente, un disque mobile portant un réseau de cercles concentriques correspondant aux vitesses et de droites concourant au centre du disque correspondant aux valeurs angulaires de caps de 0° à 360° et un disque support, dont le diamètre est supérieur à celui du disque mobile, qui porte un repère indiquant le cap ou la direction du courant et, à sa partie périphérique débordant le disque mobile, des graduations correspondant aux valeurs angulaires d'allures du bateau, c'est à dire à la direction de l'axe longitudinal du bateau par rapport à celle du vent, une échelle de vitesses, identique à celle du réseau de cercles concentriques du disque mobile, étant portée sur le rayon dirigé vers l'indication du cap et ayant pour origine le centre du disque support, au verso duquel disque support étant fixé en son centre un l'index tournant autour de son point de fixation et muni d'un curseur qui coulisse le long de index et est pourvu d'un point de repère servant de point d'affichage et de lecture, la face supérieure du disque support présentant deux guides parallèles au rayon dirigé vers l'indication du cap et disposés symétriquement par rapport à son centre et dont l'écartement correspond au diamètre du disque mobile, entre lesquels guides est placé ledit disque mobile.

En effet, contrairement aux réalisations connues, le calculateur selon l'invention ne comporte qu'un seul disque mobile en rotation et en translation, associé à un index tournant portant un curseur, le curseur assurant par l'intermédiaire de son point de lecture l'affichage et la lecture de tous les paramètres calculés.

Selon une autre caractéristique de l'invention, le centre du disque mobile constitue un repère servant à positionner le disque mobile en translation sur l'échelle de vitesses portée par le disque support.

La partie périphérique du disque support est de préférence graduée de 0° à 180° de part et d'autre de l'indication du cap, un repère spécial indiquant la direction du courant étant placé sur le bord diamétralement opposé à l'indication du cap.

L'index peut être prolongé au delà de son point de fixation sur le disque support par un bras de manoeuvre.

De préférence, l'extrémité périphérique de l'index portant une flèche est guidée par une gorge circulaire intégrée au disque support et qui la maintient appliquée contre ledit disque.

Une butée fixée au disque support détermine une limite de la course du disque mobile plaçant celui-ci concentriquement par rapport au disque support.

De plus, une ou plusieurs butées fixées au disque support déterminent l'autre limite opposée de la course du disque mobile empêchant celui-ci de s'échapper.

A chaque guide parallèle du disque mobile peut être associé un rebord formant avec la paroi du guide une glissière dans laquelle coulisse le disque mobile.

L'échelle de vitesses dont est muni le disque support est graduée en noeuds marins et correspond à la vitesse du bateau ou à celle du courant.

L'échelle de cercles concentriques du réseau dont est muni le disque mobile est graduée en noeuds marins et correspond à la vitesse des vents, du courant et du bateau, lesdits cercles étant groupés par zones délimitant les différentes plages de l'échelle Beaufort.

D'autres particularités de l'invention apparaitront à la lumière de la description d'un mode de réalisation présenté à titre d'exemple et illustré par les dessins, dont

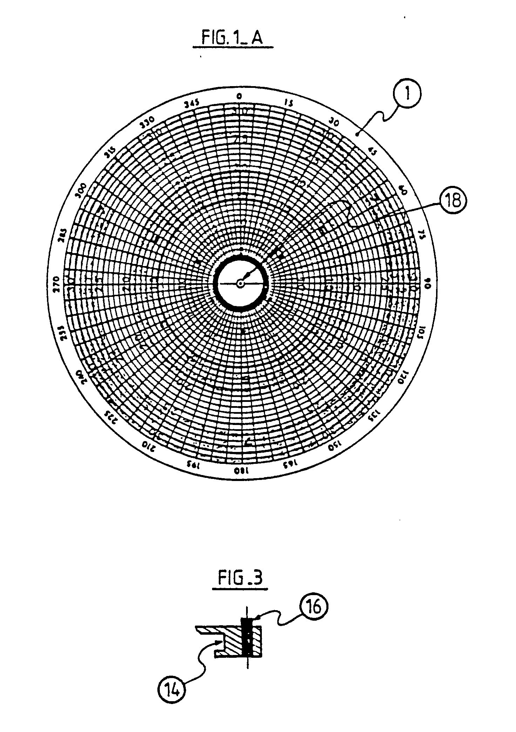

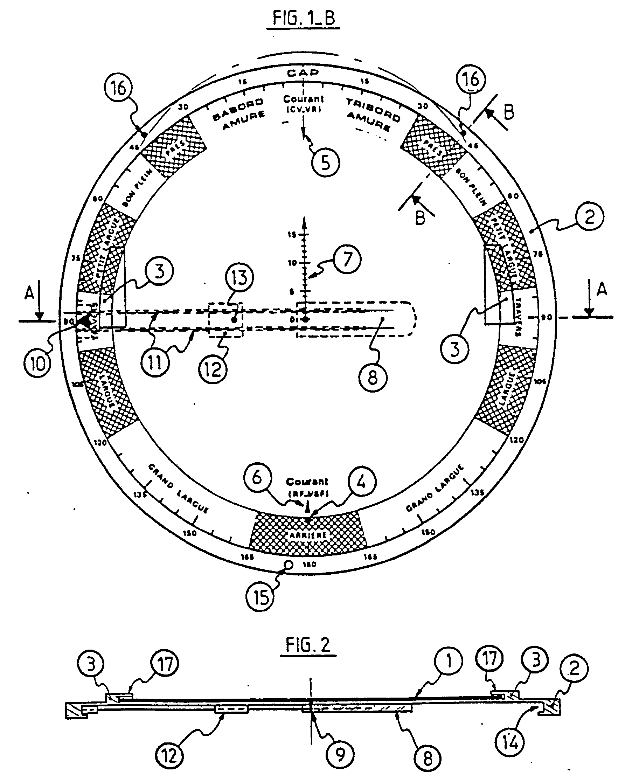

la figure 1a est une vue de dessus du disque mobile

la figure 1b est une vue de dessus du disque support

la figure 2 est une vue en coupe selon A-A de la figure 1b, avec le disque mobile placé sur le disque support

la figure 3 est une vue en coupe selon B-B de la figure 1b et

la figure 4 représente un exemple graphique des vecteurs faisant l'objet d'un calcul,

les figures 5-1 à 5-11 présentent les positions respectives des deux disques se rapportant à l'exemple de la figure 4.

Le disque mobile 1 et le disque support 2 sont en matière transparente, telle que matière plastique à base

2

d'acrylates.

Le disque mobile 1 d'un diamètre d'environ 14 cm porte un réseau de graduations de 0° à 360° matérialisées par des droites concourant en son centre correspondant aux valeurs de caps et des cercles concentriques représentant les vitesses en noeuds marins.

Puisque les vitesses correspondant aux cercles concentriques concernent aussi bien les vitesses du courant et du bateau que celles du vent, lesdits cercles concentriques présentent de plus des zones alternées de couleurs qui délimitent les différentes plages de l'échelle Beaufort indiquées sur le réseau par des indices de 1 à 7.

Le réseau est avantageusement gravé ou imprimé sur la matière plastique transparente. Le centre 18 du disque 1 constitue un repère permettant, en déplaçant le disque en translation, de le placer sur une échelle fixe du disque support.

Le disque support 2 d'un diamètre d'environ 18 cm est lui aussi en matière transparente et muni d'indications. Il est divisé en deux parties égales: tribord amure et bâbord amure, de part et d'autre de son axe. Chacune de ces parties est de plus divisée en secteurs correspondants aux différentes allures utilisées dans la marine. En haut du disque, on trouve l'indication et CAP et COURANT, munie d'une flèche 5 située sur son axe, puis de part et d'autre, l'indication des allures ainsi que des valeurs angulaires correspondantes de 0° à 180° graduées de 5° en 5°.

Opposée diamétralement à l'indication CAP et COURANT, on troupe l'indication COURANT, munie d'une flèche 6. Au centre du disque figure une échelle de vitesse 7 graduée en noeuds, identique à l'échelle du disque mobile et orientée selon le rayon dirigé vers l'indication CAP, flèche 5, le zéro étant au centre du disque.

Sous le disque se trouve fixé en son centre au moyen d'un rivet 9 un index prolongé par un bras de manoeuvre 8 et qui comporte à son extrémité une flèche 10 encadrée de trois graduations de 1 degré de part et d'autre permettant d'indiquer les différentes allures, et d'en affiner l'affichage, par l'intermédiaire de deux tiges en acier 11, sur lesquelles coulisse un curseur 12, dont la plaquette en matière transparente porte un repère sous forme d'un point 13 qui sert à afficher des valeurs et à obtenir les différents résultats par simple lecture sur le réseau du disque mobile.

Sur la face inférieure du disque est formée une gorge circulaire 14 intégrée au disque, dans laquelle est guidée la flèche 10 et qui la maintient appliquée contre la face inférieure du disque.

La face supérieure du disque 2 porte deux guides 3 parallèles à l'échelle de vitesses 7 et disposés symétriquement par rapport à son centre. L'écartement des guides 3 correspond au diamètre du disque mobile 1, de façon à ce que le disque mobile puisse être guidé en translation.

Une butée 4 est fixée sur le dessus du disque support 2 et elle est placée de façon à ce que le disque mobile, lorsqu'il vient par son bord inférieur en arrêt sur cette butée, ait son centre 18 confondu avec le centre du disque support.

Chaque guide 3 est associé à un rebord 17 qui forme avec la face du guide une glissière dans laquelle coulisse le disque mobile sans pouvoir s'écarter du disque support.

Sur la face supérieure du disque support sont fixées deux butées 16, qui empêchent le disque mobile de s'échapper vers le haut. Dans la description des différents modes d'emploi du calculateur, on fait appel à des notions connues des navigateurs, dont il est fait rappel ci-après.

La direction du vent est celle d'où il vient, la direction du courant est celle où il porte.

Le vent apparent (VA) est le vent que l'on reçoit à bord du bateau en mouvement.

Le vent surface (VS) est le vent que reçoit un objet flottant librement à la surface de l'eau, donc subissant l'effet du courant.

Le vent réel (VR) est le vent que reçoit un point fixe par rapport au fond.

Le vent surface futur (VSF) est le vent surface lié à l'évolution du courant.

Le cap apparent (CA) est la direction de l'axe longitudinal du bateau.

Le cap vrai (CV) est le cap apparent corrigé de la dérive de vent.

La route surface (RS) est le vecteur ayant pour direction le cap vrai et pour intensité la vitesse du bateau.

La route fond (RF) est le vecteur correspondant à la route du bateau sur la carte.

Le cap fond (CF) est la direction de la route fond.

Dans le cas où il n'y a pas de courant ou s'il est négligeable, on ne calculera que les paramètres vitesse et direction du vent réel (VR) ou du vent surface futur (VSF), les autres paramètres n'existant pas.

Dans le cas où il y a du courant, on calculera au choix: le cap vrai (CV); la route fond (RF); le vent surface (VS); le vent surface (VS) et le vent réel (VR); le vent surface (VS), le vent réel (VR) et le vent surface futur (VSF).

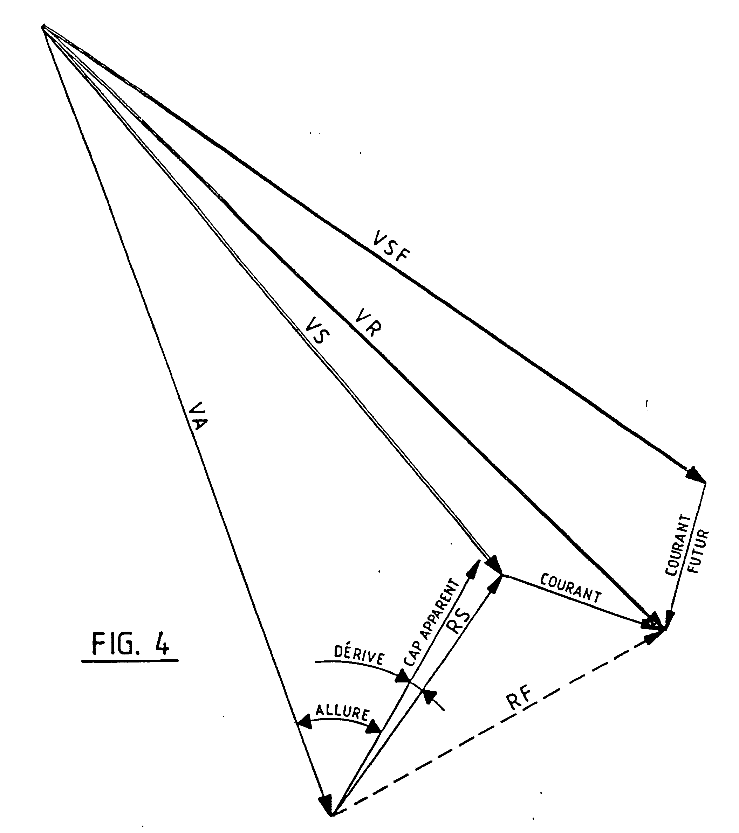

La figure 4 représente graphiquement tous les vecteurs qui font l'objet des manipulations pouvant être effectuées à l'aide du calculateur selon l'invention.

Les données fournies par les instruments de bord sont la vitesse du vent apparent, sa direction par rapport à l'axe du bateau (allure), la dérive, la vitesse et la direction du bateau, tandis que les caractéristiques du courant sont disponibles sur la carte en fonction des heures-marées.

En possession de ces données, on peut calculer dans l'ordre les vecteurs représentés à la figure 4, qui sont, pour les vents, VS, VR, VSF et, pour la route, CV et RF.

Le VA est la somme vectorielle du VS et du vent relatif crée par RS.

Le VS est la somme vectorielle du VR et du vent relatif crée par le courant.

Le VSF est la somme vectorielle du VR et du vent relatif crée par le courant futur.

La RF est la somme vectorielle de RS et du courant.

Avant chaque opération, on place le disque mobile concentriquement sur le disque support grâce à la butée 4.

Pour calculer la direction et la vitesse du vent surface, on procède de la façon suivante.

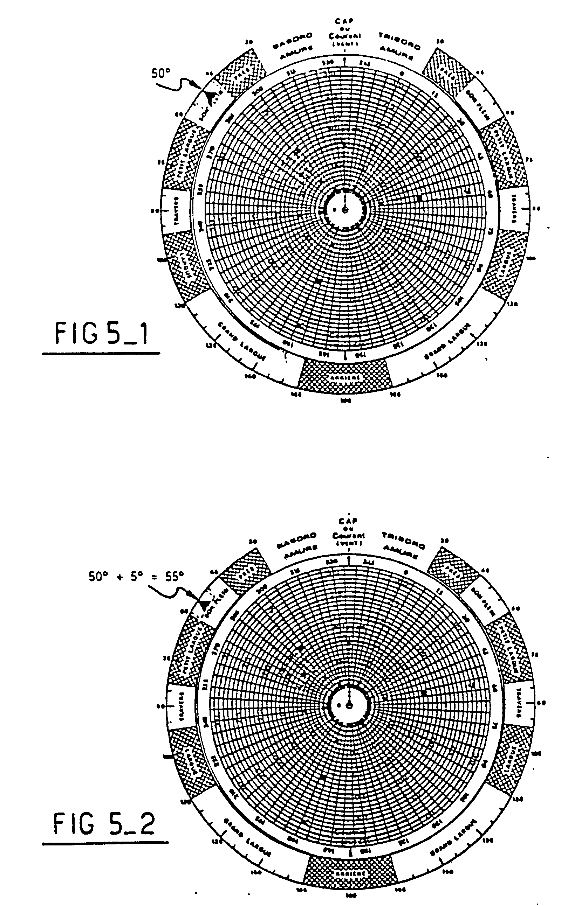

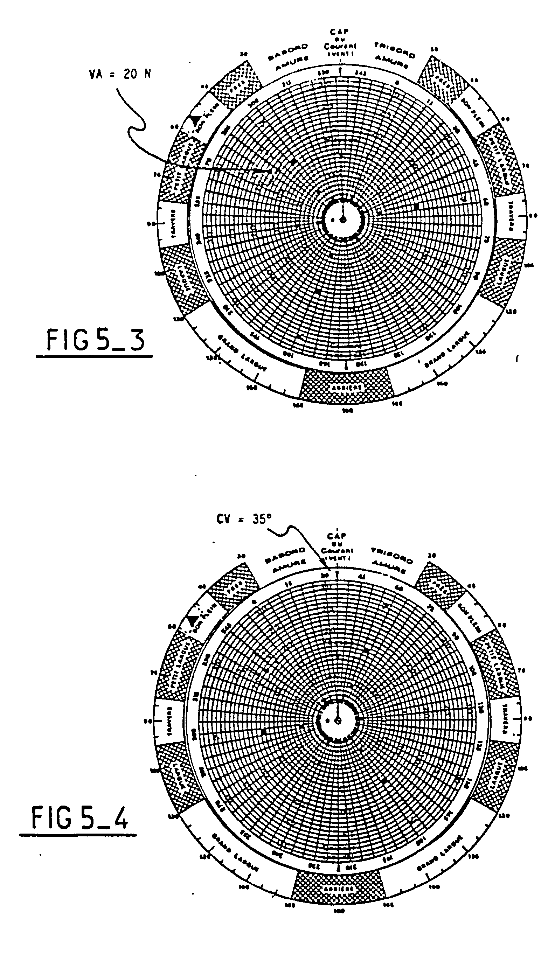

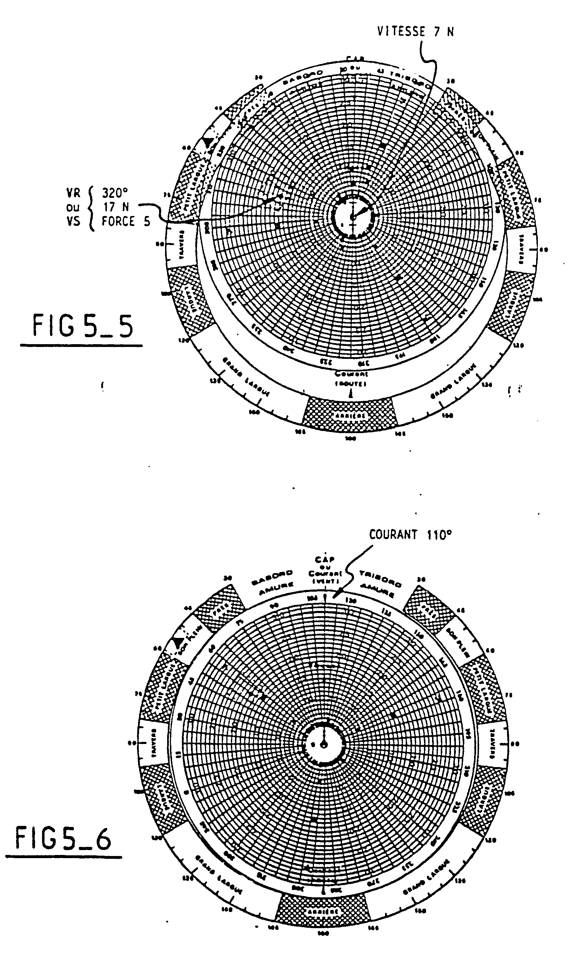

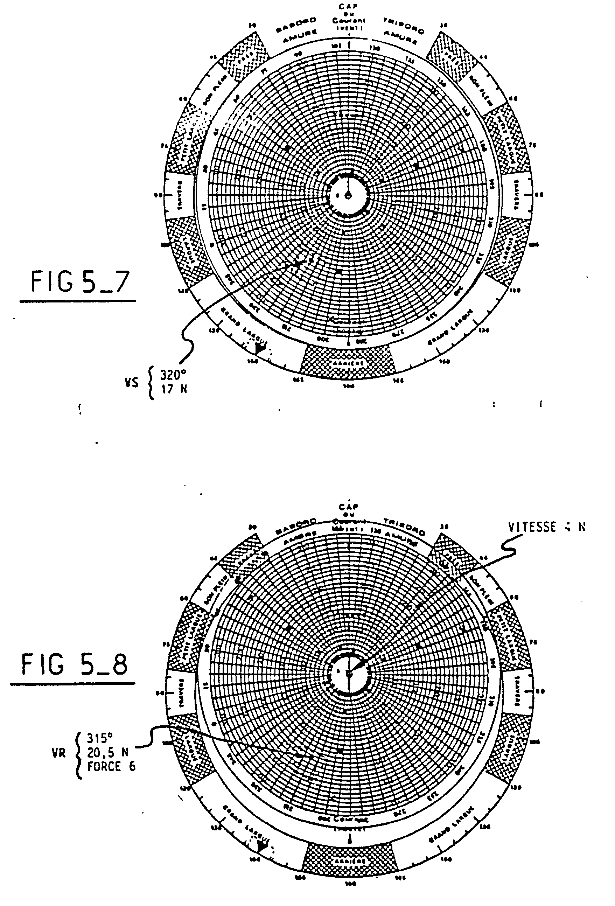

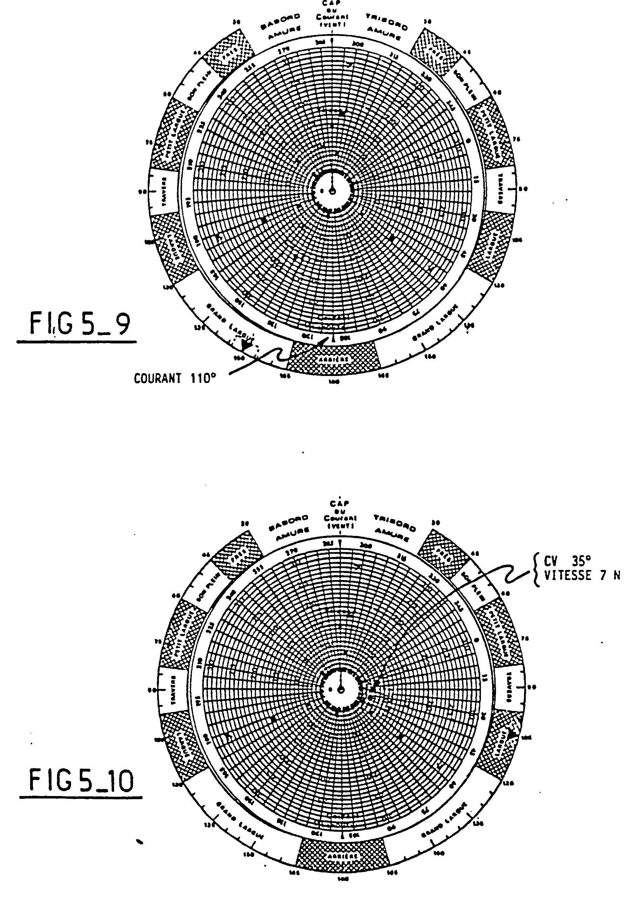

On place l'extrémité 10 de l'index sur le chiffre de l'échelle des allures correspondant à la direction du vent apparent par rapport au cap apparent (figure 5-1, allure 50° bâbord amure). On ajoute à cette valeur la valeur de la dérive (figure 5-2, 5°).

On fait glisser le curseur 12 le long de l'index de façon à ce que le point de lecture 13 soit placé sur le cercle concentrique correspondant à la vitesse du vent apparent (figure 5-3, 20 noeuds). On tourne le disque mobile 1 de façon à placer en regard du repère 5 du cap la valeur angulaire du cap vrai (figure 5-4, 35°). On fait coulisser le disque mobile guidé par les guides 3 de façon à ce que le centre du disque mobile soit placé sur la valeur numérique de l'échelle 7 indiquant la vitesse du bateau (figure 5-5, 7 noeuds). La position du point 13 par rapport aux droites concourantes du disque mobile donne la direction du vent surface et sa position par rapport aux cercles concentriques du disque mobile donne la vitesse de ce vent.

Dans le cas représenté aux figures 5-1 à 5-5, l'allure est de 50° bâbord amure, la dérive de 5°, la vitesse du vent apparent de 20 noeuds, le cap vrai à 35°, la vitesse du bateau de 7 noeuds. Le vent calculé est orienté à 320° par rapport au nord géographique et sa vitesse est de 17 noeuds.

Lorsque le courant est négligeable, la même opération que pratiquée précédemment donne pour résultat le vent réel.

Pour calculer le vent réel pour un courant non négligeable, on commence par tourner le disque mobile de façon à placer en regard du repère 5 du cap la valeur angulaire correspondant à la direction du courant (figure 5-6, 110°). On tourne l'index de façon à placer le point 13 sur le chiffre de l'échelle dont est muni le disque mobile et correspondant à la direction du vent de surface (320°) et on fait glisser le curseur 12 de façon à placer le point de lecture 13 sur le cercle concentrique du disque mobile correspondant à la vitesse de ce vent (figure 5-7, 320° et 17 noeuds). On fait coulisser le disque mobile tout en maintenant son orientation angulaire (110°) de façon à placer son centre sur la valeur numérique de l'échelle 7 indiquant la vitesse du courant (figure 5-8, 4 noeuds). Le disque mobile s'étant déplacé par rapport au point de lecture 13, on lit la direction du vent réel en observant que le point de lecture 13 est placé sur la droite concourante du disque mobile correspondant à l'angle de 315°, on lit la vitesse du vent réel en observant que ce point est placé sur le cercle concentrique du disque mobile correspondant à 20,5 noeuds, de plus, les différentes zones teintées indiquent qu'il s'agit d'un vent de force 6 sur l'échelle de Beaufort (fig. 5-8, 315° 20,5 noeuds, force 6).

Pour calculer le vent surface futur (VSF), on commence par indiquer la direction du courant futur en tournant le disque mobile par rapport au repère 6 en bas du disque support, on maintient en position le disque mobile, tandis qu'on indique la direction et la vitesse du vent réel (VR) avec le point 13, finalement on indique la vitesse du courant futur avec le centre 18 du disque mobile en conservant son orientation. Le point 13 donne la direction, la vitesse et la force du VSF sur le disque mobile.

Lors de calculs de route n'ayant lieu qu'en présence du courant, on procède de la façon suivante.

Pour calculer le cap vrai (CV), on indique la direction du courant en regard du repère 5 en tournant le disque mobile, on maintient le disque mobile en position et on indique avec le point 13 le cap fond (CF) qui est le cap souhaité. Pour une meilleur clarté d'affichage, on amène le point sur le dernier cercle.

On indique la vitesse du courant à l'aide du centre 18 du disque mobile en déplaçant celui-ci tout en conservant son orientation.

La lecture effectuée sur le disque mobile au moyen du point 13 donne le CV, lorsqu'on affiche la vitesse estimée du bateau en faisant coulisser le curseur sur l'index.

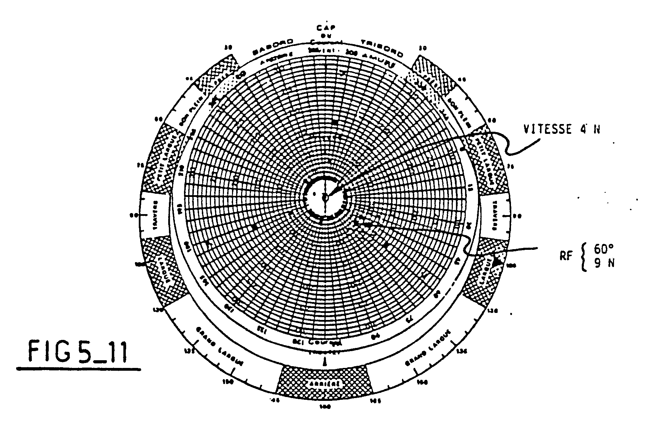

Pour le calcul de la route fond (RF), on fait tourner le disque mobile de façon à placer en regard du repère 6 (courant) du disque support la valeur angulaire correspondant à la direction du courant (figure 5-9, 110°). On tourne l'index de façon à placer le point 13 sur le chiffre de l'échelle des droites concourantes du disque mobile correspondant à la direction du cap vrai et on glisse le curseur 12 pour placer le point de lecture 13 sur le cercle concentrique du disque mobile correspondant à la vitesse du bateau (figure 5-10, 35° et 7 noeuds). On fait coulisser le disque mobile de façon ce que son centre 18 soit placé sur la valeur numérique de l'échelle 7 correspondant à la vitesse du courant (figure 5-11, 4 noeuds). La position du point de lecture 13 par rapport aux droites concourantes du disque mobile donne la direction de la route fond (60°) et sa position par rapport aux cercles concentriques donne sa vitesse (9 noeuds).

Le tableau suivant résume, dans l'ordre dans lequel on opère, les manipulations décrites précédemment. Le calcul du courant (similaire aux autres) a été rajouté, mais la manipulation n'est pas détaillée.

| SANS \| AVEC COURANT | | "FLECHE" | "DISQUE" | "POINT" | "DISQUE" |
|---|---|---|---|---|---|
| VR | VS | ALLURE+DERIVE | ➤ | VA | RS |
| ☒ | VR | ➤ | COURANT (DIRECTION) | VS | COURANT (VITESSE) |
| VSF | VSF | ➤ | | VR | |
| ☒ | CV | ➤ | | CF | |
| ☒ | RF | ➤ | | RS | |
| COURANT | | ➤ | RS(DIRECTION) | RF | RS (VITESSE) |

Pour tous les calculs autres que celui du VR (sans courant) ou du VS (avec courant), la première opération consiste à faire tourner le disque mobile pour indiquer la direction du courant. La deuxième opération consiste à indiquer à l'aide du point 13 sur le disque mobile la direction du vent, de la route ou du cap et, en faisant glisser le curseur 12 le long de l'index, à placer le point 13 sur la valeur de la vitesse du vent ou de celle du bateau. Ainsi, la deuxième opération fait appel au paramètre résultant de la manipulation précédente, à savoir celle concernant le VS, VR, CF ou RS.

La troisième opération concerne de nouveau le courant et consiste à faire coulisser le disque mobile pour afficher la vitesse du courant à l'aide de son centre 18 sur l'échelle 7.

Pour calculer le vent réel (VR) sans courant ou le vent surface (VS) avec courant, la première opération consiste à indiquer l'allure majorée de la dérive à l'aide de la flèche 10 sur l'échelle du disque support. Les deux autres opérations sont le maniement du curseur pour indiquer la vitesse du vent apparent (VA) et la rotation du disque en fonction de la valeur angulaire du cap vrai, plus le déplacement en translation du disque pour indiquer la vitesse du bateau.

La détermination rapide des paramètres cités permet au navigateur:

- dans le cas du louvoyage, de connaitre le cap que l'on pourra tenir sur l'autre bord et par conséquent le moment où l'on doit virer de bord.
- de connaitre rapidement le cap à prendre afin de compenser la dérive pour toute variation du courant, particulièrement utile aux vedettes de sauvetage.
- de connaitre le prochain vent surface en fonction des variations du courant, afin de pouvoir modifier sa route et de se placer au mieux avant la saute du vent surface.
- d'estimer l'allure et la force du vent apparent que l'on aura à subir pour un cap et un vent donnés, afin de pouvoir préparer la voilure en conséquence
- de déterminer le meilleur "près" ou le meilleur "largue"
- de résoudre de nombreux problèmes que connaissent les participants de régates, tels que louvoyage, premier bord à tirer, cône de sécurité et autres.

Le calculateur selon l'invention permet le calcul de tous ces paramètres de façon très aisée grâce à un seul disque mobile en rotation et en translation et à l'index associé au disque support et muni de son curseur. L'invention n'est pas limitée au mode de réalisation présenté à titre d'exemple, mais elle est susceptible de nombreuses variantes pouvant être apportées par l'homme de l'art, en particulier en modifiant les échelles de valeurs employées.

## Revendications

1. Calculateur de vents et de route pour la navigation comprennent deux disques superposés en matière transparente, un disque mobile (1) portant un réseau de cercles concentriques correspondant aux vitesses et de droites concourant au centre du disque correspondant aux valeurs angulaires de caps de 0° à 360° et un disque support (2) dont le diamètre est supérieur à celui du disque mobile et qui porte un repère (5) indiquant le cap ou la direction du courant et, à sa partie périphérique débordant le disque mobile, des graduations correspondant aux valeurs angulaires d'allures du bateau, c'est à dire à la direction de l'axe longitudinal du bateau par rapport à celle du vent, une échelle de vitesses (7), identique à celle du réseau de cercles concentriques du disque mobile, étant portée sur le rayon dirigé vers l'indication du cap (5) et ayant pour origine le centre du disque support, au verso duquel disque support (2) est fixé en son centre (9) un index (10, 11) tournant autour de son point de fixation et muni d'un curseur (12) qui coulisse le long de l'index et est pourvu d'un point de repère (13) servant de point d'affichage et de lecture, la face supérieure du disque support présentant deux guides (3) parallèles au rayon dirigé vers l'indication du cap (5), disposés symétriquement par rapport à son centre et dont l'écartement correspond au diamètre du disque mobile (1), entre lesquels guides est placé ledit disque mobile en translation.

2. Calculateur selon la revendication 1, caractérisé en ce que le centre (18) du disque mobile (1) constitue un repère servant à positionner le disque mobile en translation sur l'échelle de vitesses (7) portée par le disque support (2).

3. Calculateur selon la revendication 1, caractérisé en ce que la partie périphérique du disque support (2) est graduée de 0° à 180° pour chaque amure, bâbord et tribord, de part et d'autre de l'indication du cap (5), un repère (6) indiquant la direction du courant étant placé sur le bord diamétralement opposé à l'indication du cap (5).

4. Calculateur selon la revendication 1, caractérisé en ce que l'index (10,11) est prolongé au délà de son point de fixation sur le disque support (2) par un bras de manoeuvre (8).

5. Calculateur selon la revendication 1, caractérisé en ce que l'extrémité périphérique (10) de l'index portant une flèche est guidée par une gorge circulaire (14) intégrée au disque support (2) et qui la maintient appliquée contre ledit disque.

6. Calculateur selon la revendication 1, caractérisé en en qu'une butée (4) fixée au disque support (2) détermine une limite de la course du disque mobile (1) plaçant celui-ci concentriquement par rapport au disque support (2).

7. Calculateur selon la revendication 1, caractérisé en ce qu'une ou plusieurs butées (16) fixées au disque support (2) déterminent une limite opposée de la course du disque mobile (1) empêchant celui-ci de s'échapper.

8. Calculateur selon la revendication 1, caractérisé en ce qu'à chaque guide parallèle (3) est associé un rebord (17) formant avec la paroi du guide une glissière dans laquelle coulisse le disque mobile (1).

9. Calculateur selon l'une des revendications 1 à 8, caractérisé en ce que l'échelle de vitesses (7) dont est muni le disque support (2) est graduée en noeuds marins et correspond à la vitesse du bateau ou à celle du courant.

10. Calculateur selon l'une des revendications 1 à 8, caractérisé en ce que l'échelle de cercles concentriques du réseau dont est muni le disque mobile (1) est graduée en noeuds marins et correspond à la vitesse des vents, du courant et du bateau, lesdits cercles étant groupés par zones délimitant les différentes plages de l'échelle Beaufort.

**Patentansprüche**

1. Weg- und Wandrechner für die Seefahrt bestehend aus zwei überliegenden durchsichtigen Scheiben, einer drehbaren Scheibe (1) auf welcher ein Netz konzentrischer Kreise, die die Geschwindigkeiten angeben und zur Mitte zusammenlaufende Linien entsprechend der Kurswinkelwerte van 0 bis 360°, aufgeführt sind, und einer tragenden Scheibe (2) dessen Durchmesser grösser ist als der der drehbaren Scheibe, und der mit einer Markierung versehen ist (5) für die Angabe der Kap- oder Strömungsrichtung und dessen äusserster Rand der der drehbaren Scheibe übersteht, Gradeinteilungen aufzeigt entsprechend der Bootsgeschwindigkeitswinkelwerte im Verhältnis zur Windgeschwindigkeit; eine Geschwindigkeitsskala (7) die der, dem Netz der konzentrischen Kreise der drehbaren Scheibe entspricht, ist auf der Einteilung die die Kaprichtung anzeigt ( 5) und die von der Scheibenmitte ausgeht aufgeführt. Auf der Rückseite der tragenden Scheibe (2) ist in der Mitte (9) ein um dem befestigungspunkt drehbaren Zeiger angebracht, welcher mit einem Schieber (12) versehen ist, der längt dem Zeiger entlang läuft und mit einer Markierung versehen ist (13) der als Anschlag- und Lesepunkt dient; die Oberseite der Scheibe ist mit zwei Gleitern (3) versehen die paralell zur Rille, die sich gegenüber der Kaprichtung befindet, (5) angebracht sind, spiegelgleich zur Mitte und deren Abstand dem Durchmesser der drehbaren Scheibe (1) entspricht, und zwischen welcher Gleiter die drehbare Scheibe überliegend angebracht ist.

2. Rechner entsprechend der Beschreibung 1, gekennzeichnet dadurch, dass die Mitte (18) der drehbaren Scheibe eine Markierung bildet zur Positionierung der drehbaren Scheibe überliegend auf die Geschwindigkeitsskala (7) der tragenden Scheibe (2).

3. Rechner entsprechend der Beschreibung 1, gekennzeichnet dadurch, dass der äusserste Rand der tragenden Scheibe (2) von 0 bis 180° aufgeteilt ist, für jede Halse, Backbord und Steuerbord, beidseitig des Kapweisers, (5); eine Markierung (6) für die Angabe der Strömungsrichtung befindet sich gegenüber des Kapweisers (5).

4. Rechner entsprechend der Beschreibung 1 gekennzeichnet dadurch, dass der Zeiger (10, 11) darüber hinaus seinem Befestigungspunkt auf der tragenden Scheibe (2) durch einen wendefähigen Arm fortgeführt ist (8).

5. Rechner entsprechend der Beschreibung 1, gekennzeichnet dadurch, dass der äusserste Rand (10) des Zeigers geleitet wird durch einer kreisförmigen Rille (14), die in der tragenden Scheibe (2) integriert ist und die den Arm gegen diese Scheibe drückt.

6. Rechner entsprechend der Beschreibung 1, gekennzeichnet dadurch, dass ein Anschlag (4) auf der tragenden Scheibe (2) angebracht ist und den Lauf der drehbaren Scheibe (1) konzentrisch zur tragenden Scheibe bestimmt.

7. Rechner entsprechend der Beschreibung 1, gekennzeichnet dadurch, dass ein oder mehrere Anschläge (16) auf der tragenden Scheibe (2) angebracht sind und somit Grenzen für den Lauf der drehbaren Scheibe (1) bilden und dadurch verhindern, dass die Scheibe van selbst dreht.

8. Rechner entsprechend der Beschreibung 1, gekennzeichnet dadurch, dass jeder Führer (3) verbunden ist mit einer Randleiste, die mit dem Rand des Führers eine Führungsschiene bildet in der die drehbare Scheibe (1) gleitet.

9. Rechner entsprechend der Beschreibung 1 bis 8, gekennzeichnet dadurch, dass die Geschwindigkeitsskala (7) die sich auf der tragenden Scheibe (2) befindet in Seeknoten aufgeteilt ist und der Boots- oder Strömungsgeschwindigkeit entspricht.

10. Rechner entsprechen der Beschreibung 1 bis 8, gekennzeichnet dadurch, dass die Skala des Netzes der konzentrischen Kreise die sich auf der drehbaren Scheibe (1) befindet in Seeknoten aufgeteilt ist und der Wind-, Strömungs- und Bootsgeschwindigkeit entspricht; die Kreise sind entsprechend der Beaufortskala aufgeführt.

## Claims

1. A wind and course calculator for navigation, comprising two superimposed disks made from a transparent material, a mobile disk (1) carrying a network of concentric circles corresponding to the speeds and of straight lines converging towards the center of the disk corresponding to the angular values of headings from 0 to 360° and a supporting disk (2) whose diameter is greater than that of the mobile disk and which has a mark (5) indicating the heading or the direction of the current and, at its peripheral part projecting beyond the mobile disk, graduations corresponding to the angular values of sailing trims of the boat, i.e. to the direction of the longitudinal axis of the boat with respect to that of the wind, a scale of speeds (7) identical to that of the network of concentric circles of the mobile disk, being carried on the radius directed towards the indication of the heading (5) and having as origin the center of the supporting disk, on the reverse side of which supporting disk (2) there is fixed at its center (9) a pointer (10, 11) rotating about its fixing point and having a slider (12) which slides along the pointer and has a reference dot (13) serving as display and reading point, the upper face of the supporting disk having two guides (3) parallel to the radius directed towards the indication of the heading (5), disposed symmetrically with respect to its center and whose spacing corresponds to the diameter of the mobile disk (1), between which guides is placed said mobile disk in translation.

2. Calculator according to claim 1, characterized in that the center (18) of the mobile disk (1) forms a reference for positioning the mobile disk in translation on the scale of speeds (7) carried by the supporting disk (2).

3. Calculator according to claim 1, characterized in that the peripheral part of the supporting disk (2) is graduated from 0° to 180° for each tack, port and starboard, on each side of the indication of the heading (5), a mark (6) indicating the direction of the current being placed on the edge diametrically opposite the indication of heading (5).

4. Calculator according to claim 1, characterized in that the pointer (10,11) is extended beyond its fixing point on the supporting disk (2) by an operating arm (8).

5. Calculator according to claim 1, characterized in that the peripheral end (10) of the pointer having an arrow is guided by a circular groove (14) integral with the supporting disk (2) and which holds it applied against said disk.

6. Calculator according to claim 1, characterized in that a stop (4) fixed to the supporting disk (2) defines a limit of travel of the mobile disk (1) placing this latter concentrically with respect to the supporting disk (2).

7. Calculator according to claim 1, characterized in that one or more stops (16) fixed to the supporting disk (2) define an opposite limit of travel of the mobile disk (1) preventing this latter from escaping.

8. Calculator according to claim 1, characterized in that with each parallel guide (3) is associated a flange (17) forming with the wall of the guide a slide in which the mobile disk (1) slides.

9. Calculator according to one of claims 1 to 8, characterized in that the scale of speeds (7) with which the supporting disk (2) is provided is graduated in knots and corresponds to the speed of the boat or to that of the current.

10. Calculator according to one of claims 1 to 8, characterized in that the scale of concentric circles of the network with which the mobile disk (1) is provided is graduated in knots and corresponds to the speed of the winds, of the current and of the boat, said circles being grouped in zones defining the different ranges of the Beaufort scale.

FIG. 1_ A

FIG .3

## FIG. 1_B

## FIG. 2

FIG. 4

FIG 5_1

FIG 5_2

VA = 20 N

FIG 5_3

CV = 35°

FIG 5_4

9

VITESSE 7 N

VR { 320°
ou { 17 N
VS { FORCE 5

## FIG 5_5

COURANT 110°

## FIG 5_6

FIG 5_7

VS { 320°
     17 N

FIG 5_8

VITESSE ≈ N

VR { 315°
     20,5 N
     FORCE 6

FIG 5_9

COURANT 110°

FIG 5_10

CV 35°
VITESSE 7 N

FIG 5_11